# EUROPÄISCHE PATENTSCHRIFT

(11) **EP 2 583 845 B1**
(45) Veröffentlichungstag und Bekanntmachung des Hinweises auf die Patenterteilung: **09.04.2014**
(21) Anmeldenummer: 12401207.1
(22) Anmeldetag: 17.10.2012
(51) Int. Cl.: B60G 21/055, B60G 11/20, F15B 7/00

(54) **Stabilisatoranordnung**
Stabiliser assembly
Agencement de stabilisateur

(30) Priorität: 18.10.2011 DE 102011116092
(43) Veröffentlichungstag der Anmeldung: 24.04.2013
(73) Patentinhaber: Benteler Automobiltechnik GmbH, 33102 Paderborn (DE)
(72) Erfinder: Berheide, Friso, 33378 Rheda-Wiedenbrück (DE); Janzen, Andreas, 34439 Willebadessen (DE)
(74) Vertreter: Sprenger, Gerrit Lars Eike

(56) Entgegenhaltungen:
- EP-A2- 1 437 253
- AU-B2- 617 467
- DE-A1- 4 337 771
- DE-A1- 10 206 032
- DE-A1- 19 936 540
- DE-A1- 19 936 541
- DE-B- 1 179 124
- FR-A1- 2 623 754
- US-A- 3 836 272

## Beschreibung

Die Erfindung betrifft eine Stabilisatoranordnung für ein Kraftfahrzeug entsprechend der Merkmale des Oberbegriffes des Anspruchs 1.

Stabilisatoren werden im Fahrzeugbau zur Verbesserung des Wankverhaltens von Kraftfahrzeugen eingesetzt. Bei wechselseitigem Einfedern der Räder soll das Wanken begrenzt und die Beherrschbarkeit des Fahrzeugs verbessert werden. Je nach der Fahrsituation kann es notwendig sein, dass ein Stabilisatorstab entweder drehweich oder drehhart agiert. Um beide Zustände mit einem Bauteil realisieren zu können, werden vermehrt aktive oder semi-aktive Stabilisatorsysteme angeboten, die zwischen beiden Zuständen, insbesondere mit beliebigen Zwischenstufen, geschaltet werden können. Diese Systeme bestehen aus zwei Stabilisatorhälften und einem diese verbindenden Aktuator. Die Verbindungen zwischen diesen Einzelteilen sind hohen Belastungen ausgesetzt und müssen sowohl axialen als auch rotatorischen Bewegungen gegenüber fest sein.

Die DE-PS 11 05 290 offenbart eine derartige Stabilisatoranordnung, bei der die Stabilisatorhälften mit dem Aktuator über eine Verzahnung drehfest verbunden werden. Die Stabilisatorhälften weisen dabei eine Außenverzahnung auf, wohingegen die jeweiligen Aktuatoranschlüsse eine Innenverzahnung aufweisen.

Auch die DE 1 179 124 A weist eine solche Verzahnung auf, mittels welcher ein Drehkolben mit der dortigen Stabilisatorhälfte in Form eines Drehstabteils verbunden ist.

Auch aus der DE 199 36 540 A1 ist eine ähnliche Stabilisatoranordnung bekannt, bei der die Stabilisatorhälften und ein Aktuator über Kopplungsglieder miteinander verbunden werden. Der Endabschnitt der Stabilisatorhälfte wird in das Kopplungsglied eingesteckt und mit einer Lötverbindung stoffschlüssig mit diesem verbunden. Das andere Ende des Kopplungsgliedes ist mit einer Innen- oder Außenverzahnung ausgestattet, wobei der Anschlussteil des Aktuators die dazu korrespondierende Verzahnung besitzt.

In allen vorgenannten Fällen entsteht zwar eine drehfeste Verbindung, die rotatorisch wirkenden Kräften widerstehen kann, jedoch muss eine axiale Belastung allein durch eine Pressung oder die stoffschlüssige Verbindung der verzahnten Abschnitte ineinander kompensiert werden.

Im ersten Fall - einer solchen so genannten Übermaßverbindung - werden die einzelnen Bauteile ineinander gesteckt, wobei das Außenmaß des inneren Bauteils geringfügig größer ist als das Innenmaß des äußeren Bauteils. Die Bauteile werden ineinander gepresst und auf Druck belastet. Dies führt zu einer starken flächigen, lokalen Belastung der Bauteile, die sich negativ auf deren Lebensdauer auswirkt.

Im Fall einer stoffschlüssigen Verbindung, Schweißen oder Löten etwa, findet ein Wärmeeintrag in das Material statt. Im Allgemeinen wird das Stabilisatormaterial zuvor einer Wärmebehandlung zur Verbesserung der Lebensdauer unterworfen. Durch ein wiederholtes Einbringen von Wärme wird die somit erreichte Härtung des Materials wieder vermindert. Es ist also von Vorteil, wenn auf zusätzlichen Wärmeeintrag verzichtet werden kann.

Die DE 43 37 771 A1 zeigt einen hydraulischen Schwenkmotor innerhalb einer zweigeteilten Stabilistoranordnung, umfassend ein erstes Stabilisatorteil, welches mit einer Schwenkmotorwelle drehfest verbunden ist, ein zweites Stabilisatorteil, das mit einem Schwenkmotorgehäuse drehfestverbunden ist, wobei als Anbindung zwischen dem Stabilisatorteil und dem Schwenkmotor eine Einschubverbindung mittels einer Spannverbindung dient. Allerdings werden auch bei einer solchen Spannverbindund die Oberflächen belastet, was beispielsweise zu einer verkürzten Lebensdauer führen kann.

Die DE 102 06 032 A1 zeigt eine Stabilisatoranordnung, bei dem das Ende der Stabilisatorhälfte durch ein dieses Ende umformendes Herstellungsverfahren formschlüssig mit dem dortigen Verbindungsabschnitt verbindet. Auch hierbei findet eine die Lebensdauer einschränkende Belastung des Endes der Stabilisatorhälfte statt.

Auch der DE 199 36 541 A1 ist eine Stabilisatoranordnung zu entnehmen, bei der eine Belastung der Oberflächen der zu verbindenden Teile statt. Hier wird nämlich die Verbindung durch eine Vorspannung gewährleistet, welche über die gesamte Umfangrichtung der dortigen Klemmbuchse erzeugt wird. Dadurch ist auch hierbei eine Belastung der Oberflächen gegeben, die sich beispielsweise negativ auf Lebensdauer der Stabilisatoranordnung auswirken kann.

Es ist somit die Aufgabe der vorliegenden Erfindung eine Stabilisatoranordnung für ein Kraftfahrzeug zur Verfügung zu stellen, bei der die Verbindung zwischen Stabilisatorhälfte und Aktuator in einfacher Weise gegenüber axialen Kräften gesichert ist und die einzelnen Bauteile nicht zusätzlich belastet werden.

Diese Aufgabe wird gelöst durch eine Stabilisatoranordnung gemäß Anspruch 1. Weitere vorteilhafte Ausgestaltungen der Erfindung sind Gegenstand der Unteransprüche.

Eine erfindungsgemäße Stabilisatoranordnung für ein Kraftfahrzeug besteht aus einer ersten Stabilisatorhälfte, einer zweiten Stabilisatorhälfte, sowie einem die beiden Stabilisatorhälften koppelnden aktiven oder semi-aktiven Aktuator. Der Aktuator besitzt einen ersten Verbindungsabschnitt, der mit der ersten Stabilisatorhälfte, und einen zweiten Verbindungsabschnitt, der mit der zweiten Stabilisatorhälfte drehfest verbunden ist. Außerdem sind die Verbindungen axial unverschiebbar ausgeführt, indem die Stabilisatorhälften mit ihren Stirnseiten über ein Verbindungselement mit den Verbindungsabschnitten verbunden sind, wobei das Verbindungselement durch einen Stift, ein Bolzen oder eine Schraube oder dergleichen dargestellt ist und in axialer Richtung der Stabilisatorhälften mit diesen verbunden ist. Einen in dieser Weise gestaltetes Verbindungselement wird bevorzugt durch eine Öffnung in der Wand des Verbindungsabschnitts des Aktuators geführt. Unter der Stirnseite ist die Fläche der Stabilisatorhälfte zu verstehen, die am Ende des geraden Abschnitts der Stabilisatorhälfte senkrecht zur Mantelfläche der Stabilisatorhälfte steht. Mit dieser Anordnung des Verbindungselements ist zudem eine sehr platzsparende Gestaltung der gesamten Stabilisatoranordnung erreichbar.

Durch die erfindungsgemäße Verbindung wird sicher gestellt, dass die Stabilisatorhälften mit den Verbindungsabschnitten zwar formschlüssig verbunden sind, aber ohne dass die aktuatorseitigen Enden der Stabilisatorhälften unnötigen Druckbelastungen auf ihre Manteloberfläche und daraus folgenden Materialschwächungen ausgesetzt sind.

Bevorzugt ist die drehfeste Verbindung als Kernverzahnung ausgebildet. Dabei besitzt das Ende des Stabilisators eine Außenverzahnung und das Verbindungsstück des Aktuators eine Innenverzahnung. Die jeweiligen Zähne greifen formschlüssig ineinander, so dass hier ein vollständiger Kraftschluss hergestellt wird. Vorteilhafterweise ist hier keine weitere Bearbeitung notwendig, um eine drehfeste Verbindung herzustellen. Ebenfalls entfällt zusätzlicher Klebstoff oder gar ein thermisches Fügen mittels Schweißen oder Löten.

Weiterhin besitzt die Stirnseite der Stabilisatorhälfte bevorzugt eine längliche Ausnehmung, die mit der Öffnung in der Wand des Verbindungsabschnittes des Aktuators korrespondiert. Das Verbindungselement wird aktuatorseitig durch die Öffnung in die Ausnehmung geführt und verbindet so die beiden Bestandteile. Gleichzeitig kann das Verbindungselement noch abdichtende Eigenschaften übernehmen und das Innenleben des Aktuators vor Verschmutzungen und Feuchtigkeit schützen. Ein weiterer Vorteil das Verbindungselement in dieser Weise zu gestalten liegt darin, dass die Verbindung hier gegebenenfalls lösbar gestaltet sein kann, so dass ein Austausch defekter Komponenten in einfacher Weise möglich ist

Handelt es sich bei dem Verbindungselement um eine Schraube, besitzt die längliche Ausnehmung der Stabilisatorhälfte ein Innengewinde. Die Schraube besitzt einen Bund, der größer ist als die Öffnung in der Wand des Verbindungsabschnittes. Beim Verschrauben wird das Verbindungselement mit dem Bund gegen die Stabilisatorhälfte gepresst. Dieser bildet so zusammen mit dem Gewinde die axiale Sicherung.

Eine weitere Ausführungsform für das Verbindungselement ist ein Bolzen mit Bund. Dieser wird mit leichtem Übermaß in die längliche Ausnehmung gepresst. Im Gegensatz zu den weiter oben als nachteilig benannten Pressverbindungen wird hier aber nicht der Stabilisator und besonders dessen im Einsatz stark belastete Oberfläche destabilisiert, sondern nur ein kleiner Abschnitt des Kernbereichs des Stabilisators, der beim Verdrehen oder Biegen nur geringe Belastungen erleidet. Außerdem unterstützt der Bund des Bolzens zusätzlich die axiale Festigkeit der Verbindung.

Selbstverständlich ist es möglich, zusätzlich zu den eben genannten Elementen Stift, Bolzen und Schraube einen Klebstoff oder eine stoffschlüssige Verbindung einzusetzen, um die Ausrichtung der Komponenten untereinander zu erleichtern.
Klebstoff oder stoffschlüssige Verbindung haben dann ausschließlich unterstützende Funktion. Durch sie werden die einzelnen Bestandteile in der richtigen Position zueinander gehalten bis beispielsweise ein Bolzen durch die Öffnung der Wand des Verbindungselements in die längliche Ausnehmung des Stabilisators geführt worden ist.

Weiterhin hat es sich als vorteilhaft erwiesen, an dem Ende der Kerbverzahnung, das dem Aktuator abgewandt ist, einen Anschlag auszuformen. An diesem Anschlag kann sich das Verbindungselement abstützen und es wird gewährleistet, dass bei der Montage die Stabilisatorhälfte exakt an ihrer vorhergesehenen Position in der zugehörigen Aufnahme in dem Verbindungsabschnitt positioniert wird.

In einer besonders vorteilhaften Ausgestaltung der Erfindung bestehen der Aktuator und mindestens einer seiner Verbindungsabschnitte aus einem Stück. Dies bietet Vorteile in der Montage, da weniger Einzelteile zusammengefügt werden müssen. Auch die Vermeidung von Verbindungsstellen führt vorteilhaft zu einer größeren Stabilität des Gesamtbauteils.

Nichtsdestotrotz bietet es auch Vorteile, wenn mindestens einer der Verbindungsabschnitte als separates Bauteil ausgebildet ist. In einer solchen Ausgestaltung der Erfindung ist die Öffnung des Verbindungsabschnittes von innen leichter zum Einführen des Verbindungsteils zugänglich. Außerdem kann es für eine besondere Konstruktion des Aktuators notwendig sein, die Verbindungsabschnitte und den Rest des Aktuators aus unterschiedlichen Materialien herzustellen.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen:
- Figur 1:: eine Ansicht der Stabilisatoranordnung, wobei die einzelnen Komponenten noch nicht miteinander verbunden sind,
- Figur 2:: einen Querschnitt durch die Verbindungsstelle zwischen Stabilisatorhälfte und Verbindungsabschnitt und
- Figur 3:: eine Ansicht der Kerbverzahnung des Endes der Stabilisatorhälfte.

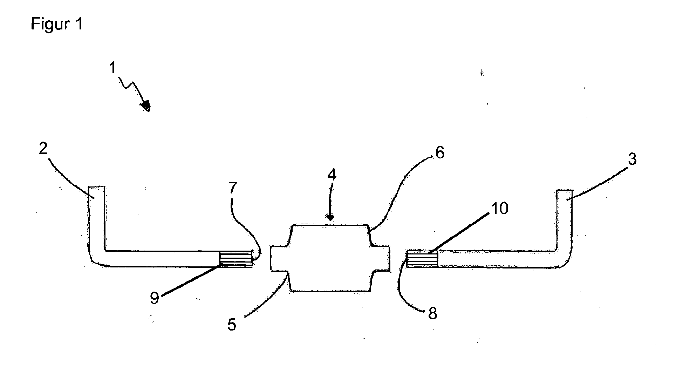

Eine erfindungsgemäße Stabilisatoranordnung 1 wird in Figur 1 gezeigt. Sie besteht aus einer ersten Stabilisatorhälfte 2 einer zweiten Stabilisatorhälfte 3, sowie einem Aktuator 4. Dieser Aktuator 4 kann aktiv oder auch semi-aktiv ausgestaltet sein und verbindet die beiden Stabilisatorhälften 2, 3 miteinander.

In der Figur 1 ist dieser Aktuator 4 mittig angeordnet. Dies ist aber nicht zwingend so vorgesehen. Es kann sich beispielsweise aus Gründen der Nutzung des Bauraums vorteilhaft anbieten, den Aktuator 4 versetzt von der Mitte anzubringen. Die Bezeichnung Stabilisatorhälfte ist dann nicht so zu verstehen, dass die beiden Teile genau eine Hälfte des gesamten Stabilisators darstellen, sondern dass sich die beiden Teile zusammen mit dem Aktuator 4 zu einem vollständigen Stabilisator ergänzen.

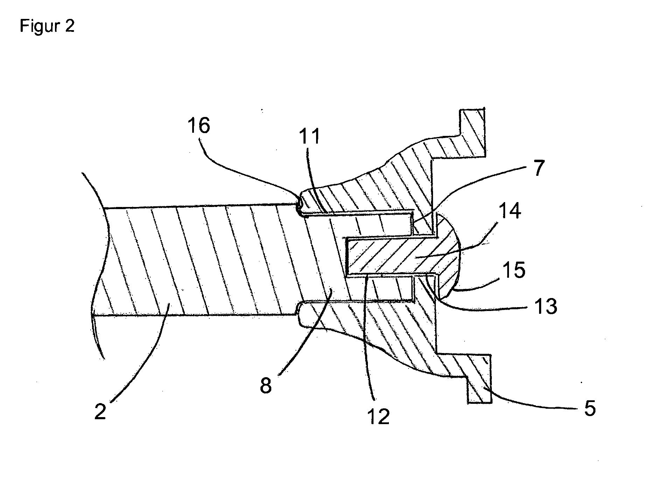

Der Aktuator besitzt an seinen Enden einen ersten Verbindungsabschnitt 5 und einen zweiten Verbindungsabschnitt 6. Diese Verbindungsabschnitte 5, 6 dienen dazu, die korrespondierenden Stabilisatorhälften 2, 3 an dem Aktuator zu positionieren.
Die Verbindungsabschnitte 5, 6 besitzen dafür Aufnahmen (siehe Aufnahme 11 in Figur 2), in die die Stabilisatorenden 9, 10 geschoben werden. Die Enden 9, 10 der Stabilisatorhälften sind mit einer Außenverzahnung ausgestattet, wohingegen die Aufnahmen mit einer dazu passenden Innenverzahnung ausgestattet sind. Die Verzahnungen bilden einen Formschluss, der eine drehfeste Verbindung sicherstellt.

Im Bereich der Kerbverzahnung ist keine Presspassung ausgebildet, wodurch eine Stabilisatorhälfte 2, 3 und ein Verbindungsabschnitt 5, 6 weiterhin relativ zueinander beweglich sind. Um auch eine axiale Unbeweglichkeit zu erreichen, wir ein Verbindungselement verwendet, das die beiden Einzelteile miteinander verbindet.

Eine solche Verbindung ist in Figur 2 dargestellt. In diesem Beispiel ist die erste Stabilisatorhälfte 2 zusammen mit dem ersten Verbindungsabschnitt 5 abgebildet. Die Darstellung gilt analog natürlich auch für die zweite Stabilisatorhälfte 3 und den zweiten Verbindungsabschnitt 6. Der Verbindungsabschnitt 5 ist in diesem Fall kein integraler Bestandteil des Aktuators und wird nach Montage der Stabilisatorhälfte 2 an diesem befestigt (entsprechende Vorrichtungen sind nicht dargestellt).

Das Ende 9 der ersten Stabilisatorhälfte wird in die Aufnahme 11 des Verbindungsabschnitts 5 geschoben. An ihrer Stirnseite 7 besitzt die Stabilisatorhälfte 2 eine längliche Ausnehmung 12. Sobald das Ende 9 der Stabilisatorhälfte 2 vollständig in der Aufnahme 11 sitzt, befinden sich die längliche Ausnehmung 12 und eine Öffnung 13 in der Wand des Verbindungsabschnitts 5 deckungsgleich übereinander. Beide besitzen den gleichen Durchmesser.

Ein Verbindungselement 14, das hier in Form eines Bolzens mit einem Bund 15 ausgebildet ist, wird durch die Öffnung 13 in die längliche Ausnehmung 12 eingeführt. Der Durchmesser des Verbindungselement 14 ist leicht größer als der Durchmesser der länglichen Ausnehmung 12 und der Öffnung 13, so dass eine geringe Übermaßpassung entsteht. Der Bund 15 besitzt einen größeren Durchmesser als die Öffnung 13, so dass der Verbindungsabschnitt 5 mit dem Bund 15 gegen die Stabilisatorhälfte 2 gedrückt wird.

Die Außenverzahnung mündet an ihrer dem Aktuator 4 abgewandten Seite in einen Anschlag 16. Der Verbindungsabschnitt 5 drückt gegen diesen Anschlag 15, der somit als Widerlager dient und die axiale Festigkeit der Verbindung unterstützt.

Durch die passgenaue Einformung des Verbindungselement 14 in die längliche Ausnehmung 12 und die Öffnung 13 wird außerdem das Eindringen von Feuchtigkeit und Schmutz in das Innere des Aktuators verhindert.

Ebenso wie mit einem glatten Bolzen kann eine solche Verbindung durch eine Verschraubung realisiert werden. In diesem Fall besitzt die längliche Ausnehmung 12 ein Innengewinde, in das durch die Öffnung 13 eine Schraube gedreht wird.

Natürlich können im Rahmen der Erfindung auch andersartige Verbindungselemente zum Einsatz kommen. Die Ausführung ist ausdrücklich nicht auf Schrauben, Bolzen und dergleichen beschränkt. Die Verbindungselemente können beispielsweise aus Metall oder Kunststoff bestehen.

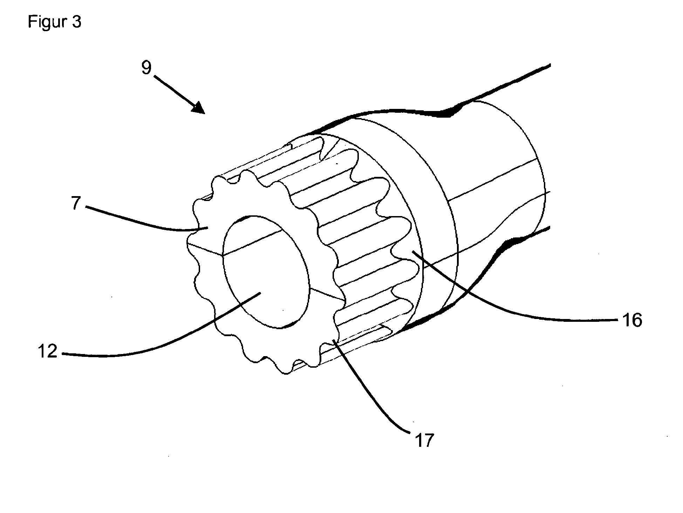

Eine etwas detailliertere Ansicht des Endes 9 der ersten Stabilisatorhälfte 2 liefert Figur 3. In der Stirnseite 7 befindet sich die längliche Ausnehmung 12 zur Aufnahme des Verbindungselementes. An der Außenseite der Stabilisatorhälfte sind die Zähne der Außenverzahnung 17 und der Anschlag 16 ausgebildet.

Zur Herstellung einer erfindungsgemäßen Stabilisatorhälfte 2, 3 eignen sich Rohre ebenso wie Vollstäbe. Dabei können die Rohre oder Vollstäbe über ihre Länge variierende Durchmesser und Querschnitte aufweisen, die auf die während der Fahrt auftretenden und lokal unterschiedlichen Belastungen abgestimmt sind. Die Rohre oder Vollstäbe werden entweder zunächst in die gewünschte Form gebogen und dann die Enden bearbeitet oder umgekehrt. Die dabei notwendigen Schritte hängen vom verwendeten Material ab.

Handelt es sich um Rohre, werden die Enden der Stabilisatorhälften zunächst aufgestaucht und/oder aufgeweitet, um ausreichend Material für die nachfolgende Ausformung der Außenverzahnung zur Verfügung zu haben. Das Aufstauchen und Aufweiten kann dabei nacheinander oder auch gleichzeitig erfolgen. Gegebenenfalls wird noch die längliche Ausnehmung, die bei einem Rohr aus dem Innenraum entsteht, noch mit einem Innengewinde ausgestattet.

Handelt es sich um einen Stabilisator aus Vollmaterial, muss dagegen noch die längliche Ausnehmung mit oder ohne Innengewinde erzeugt werden.

Nach dem Formen der Außenverzahnung werden die Enden einer mechanischen Endbearbeitung zugeführt, die Plandrehen, Fräsen, Anbringen einer Schweißvorbereitung und andere Methoden umfassen kann.

Um die Materialeigenschaften zu verbessern, werden die die Stabilisatorhälften weiteren Schritten wie Wärmebehandlung oder Verfestigungsstrahlen oder beiden unterworfen.

Außerdem werden Beschichtungen und/oder Lackierungen zum Schutz vor Korrosion auf die Stabilisatorhälften aufgebracht.

### Bezugszeichenliste

- 1: Stabilisatoranordnung
- 2: erste Stabilisatorhälfte
- 3: zweite Stabilisatorhälfte
- 4: Aktuator
- 5: erster Verbindungsabschnitt
- 6: zweiter Verbindungsabschnitt
- 7: Stirnseite von 2
- 8: Stirnseite von 3
- 9: Ende von 2
- 10: Ende von 3
- 11: Aufnahme
- 12: längliche Ausnehmung
- 13: Öffnung
- 14: Verbindungselement
- 15: Bund von 14
- 16: Anschlag
- 17: Kerbverzahnung

## Patentansprüche

1. Stabilisatoranordnung (1) für ein Kraftfahrzeug bestehend aus einer ersten Stabilisatorhälfte (2), einer zweiten Stabilisatorhälfte (3), sowie einem die beiden Stabilisatorhälften koppelnden Aktuator (4), wobei ein erster Verbindungsabschnitt (5) des Aktuators (4) mit der ersten Stabilisatorhälfte (2) und ein zweiter Verbindungsabschnitt (6) des Aktuators (4) mit der zweiten Stabilisatorhälfte (3) drehfest und in axialer Richtung unverschiebbar verbunden sind, **dadurch gekennzeichnet, dass** wenigstens ein Verbindungselement (14) vorhanden ist, welches die Stabilisatorhälften (2, 3) mit ihrer Stirnseite mit den Verbindungsabschnitten (5, 6) verbindet, wobei das wenigstens eine Verbindungselement (14) als Stift-, Bolzen- oder Schraubverbindung ausgeführt ist und in axialer Richtung der Stabilisatorhälften (2, 3) mit diesen verbunden ist.

2. Stabilisatoranordnung nach Anspruch 1 **dadurch gekennzeichnet, dass** die drehfeste Verbindung als Kerbverzahnung (17) ausgebildet ist.

3. Stabilisatoranordnung (1) nach einem der vorhergehenden Ansprüche, **dadurch gekennzeichnet, dass** das Verbindungselement (14) durch eine Öffnung (13) im Verbindungsabschnitt (5, 6) des Aktuators (4) in eine korrespondierende längliche Ausnehmung (12) der Stabilisatorhälfte (2,3) geführt ist.

4. Stabilisatoranordnung (1) nach einem der vorhergehenden Ansprüche, **dadurch gekennzeichnet, dass** die axial feste Verbindung zusätzlich durch Klebstoff unterstützt ist.

5. Stabilisatoranordnung (1) nach einem der vorhergehenden Ansprüche, **dadurch gekennzeichnet, dass** die axial feste Verbindung zusätzlich durch eine stoffschlüssige Verbindung unterstützt ist.

6. Stabilisatoranordnung (1) nach einem der vorhergehenden Ansprüche, **dadurch gekennzeichnet, dass** an dem Aktuator (4) abgewandten Ende der Kerbverzahnung (17) ein Anschlag (16) ausgebildet ist.

7. Stabilisatoranordnung (1) nach einem der vorhergehenden Ansprüche, **dadurch gekennzeichnet, dass** mindestens ein Verbindungsabschnitt (5, 6) integraler Bestandteil des Aktuators (4) ist.

8. Stabilisatoranordnung (1) nach einem der Ansprüche 1 bis 6, **dadurch gekennzeichnet, dass** mindestens einer der Verbindungsabschnitte (5, 6) ein separates mit dem Aktuator (4) verbundenes Bauteil ist.

## Claims

1. Stabilizer arrangement (1) for a motor vehicle, composed of a first stabilizer half (2), a second stabilizer half (3), and an actuator (4) which couples the two stabilizer halves, wherein a first connecting section (5) of the actuator (4) is connected to the first stabilizer half (2), and a second connecting section (6) of the actuator (4) is connected to the second stabilizer half (3), in a rotationally fixed fashion and so as to be nondisplaceable in the axial direction, **characterized in that** at least one connecting element (14) is present which connects the stabilizer halves (2, 3) by their end sides to the connecting sections (5, 6), wherein the at least one connecting element (14) is embodied as a pin connection, bolt connection or screw connection, and is fixed in the axial direction of the stabilizer halves (2, 3).

2. Stabilizer arrangement according to Claim 1, **characterized in that** the rotationally fixed connection is embodied as a splined coupling (17).

3. Stabilizer arrangement (1) according to one of the preceding claims, **characterized in that** the connecting element (14) is guided through an opening (13) in the connecting section (5, 6) of the actuator (4) into a corresponding elongate recess (12) in the stabilizer half (2, 3).

4. Stabilizer arrangement (1) according to one of the preceding claims, **characterized in that** the axially fixed connection is additionally supported by a bonding agent.

5. Stabilizer arrangement (1) according to one of the preceding claims, **characterized in that** the axially fixed connection is additionally supported by a materially joined connection.

6. Stabilizer arrangement (1) according to one of the preceding claims, **characterized in that** a stop (16) is formed at the end of the splined coupling (17) wherein that end is facing away from the actuator (4).

7. Stabilizer arrangement (1) according to one of the preceding claims, **characterized in that** at least one connecting section (5, 6) is an integral component of the actuator (4).

8. Stabilizer arrangement (1) according to one of Claims 1 to 6, **characterized in that** at least one of the connecting sections (5, 6) is a separate component which is connected to the actuator (4).

## Revendications

1. Agencement de stabilisateur (1) pour un véhicule automobile, constitué d'une première moitié de stabilisateur (2), d'une deuxième moitié de stabilisateur (3), ainsi que d'un actionneur (4) accouplant les deux moitiés de stabilisateur, une première portion de connexion (5) de l'actionneur (4) étant connectée à la première moitié de stabilisateur (2) et une deuxième portion de connexion (6) de l'actionneur (4) étant connectée à la deuxième moitié de stabilisateur (3), de manière solidaire en rotation et fixée dans la direction axiale, **caractérisé en ce qu'**au moins un élément de connexion (14) est prévu, lequel connecte les moitiés de stabilisateur (2, 3) par leur côté frontal aux portions de connexion (5, 6), l'au moins un élément de connexion (14) étant réalisé sous forme de connexion à broche, à boulon, ou à vis et étant connecté aux moitiés de stabilisateur (2, 3) dans la direction axiale de ces dernières.

2. Agencement de stabilisateur selon la revendication 1, **caractérisé en ce que** la connexion solidaire en rotation est réalisée sous forme de denture cannelée (17).

3. Agencement de stabilisateur (1) selon l'une quelconque des revendications précédentes, **caractérisé en ce que** l'élément de connexion (14) est guidé à travers une ouverture (13) dans la portion de connexion (5, 6) de l'actionneur (4) dans un évidement allongé correspondant (12) de la moitié de stabilisateur (2, 3).

4. Agencement de stabilisateur (1) selon l'une quelconque des revendications précédentes, **caractérisé en ce que** la connexion fixée axialement est améliorée en outre par un adhésif.

5. Agencement de stabilisateur (1) selon l'une quelconque des revendications précédentes, **caractérisé en ce que** la connexion fixée axialement est améliorée en outre par une connexion par liaison de matière.

6. Agencement de stabilisateur (1) selon l'une quelconque des revendications précédentes, **caractérisé en ce qu'**une butée (16) est réalisée au niveau de l'extrémité de la denture cannelée (17) opposée à l'actionneur (4).

7. Agencement de stabilisateur (1) selon l'une quelconque des revendications précédentes, **caractérisé en ce qu'**au moins une portion de connexion (5, 6) fait partie intégrante de l'actionneur (4).

8. Agencement de stabilisateur (1) selon l'une quelconque des revendications 1 à 6, **caractérisé en ce qu'**au moins l'une des portions de connexion (5, 6) est un composant séparé connecté à l'actionneur (4).
